(19) **Europäisches Patentamt**

**European Patent Office**

**Office européen des brevets**

(11) **EP 0 615 371 B1**

(12) **EUROPEAN PATENT SPECIFICATION**

(45) Date of publication and mention
of the grant of the patent:
**17.03.2004 Bulletin 2004/12**

(51) Int Cl.⁷: **H04M 1/72**, H04M 1/50

(21) Application number: **93119044.1**

(22) Date of filing: **25.11.1993**

(54) **Audio output equipment for a portable telephone**

Sprach- und Tonausgabevorrichtung für ein tragbares Telefon

Equipement générateur audio pour un téléphone portable

(84) Designated Contracting States:
**DE GB**

(30) Priority: **08.03.1993 JP 4631993**

(43) Date of publication of application:
**14.09.1994 Bulletin 1994/37**

(73) Proprietor: **MATSUSHITA ELECTRIC INDUSTRIAL CO., LTD.**
**Kadoma-shi, Osaka 571-8501 (JP)**

(72) Inventor: **Yamamoto, Naoyuki**
**Hodogaya-ku, Yokohama-shi Kanagawa-ken (JP)**

(74) Representative: **Patentanwälte**
**Leinweber & Zimmermann**
**Rosental 7**
**80331 München (DE)**

(56) References cited:
**EP-A- 0 216 488**           **EP-A- 0 280 323**
**GB-A- 2 220 821**           **US-A- 4 776 008**

- **PATENT ABSTRACTS OF JAPAN vol. 11 no. 154 (E-508) ,19 May 1987 & JP-A-61 290841 (SANYO ELECTRIC CO LTD)**
- **PATENT ABSTRACTS OF JAPAN vol. 10 no. 117 (E-400) ,2 May 1986 & JP-A-60 251748 (TOSHIBA K.K.)**

## Description

### BACKGROUND OF THE INVENTION

This invention relates to audio output equipment, and particularly to an audio output equipment suitable for use in digital land mobile portable telephone.

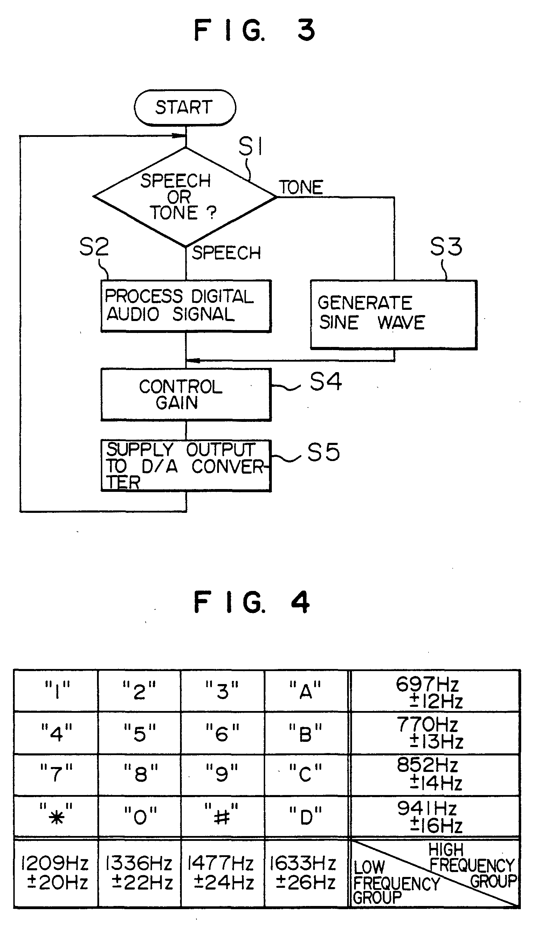

Fig. 2 shows a conventional audio output equipment for use in digital land mobile portable telephone. This audio output equipment includes a digital signal processor 1, a D/A converter 3, an audio analog switch 5, an audio gain control circuit 6, an audio acoustic element 7, a sine wave generator 8, a key validation sound analog switch 9, a key validation sound gain circuit 10, a key validation sound acoustic element 11 and a control portion 12.

In this audio output equipment shown in Fig. 2, a speech signal is produced as a digital audio signal 2 from the digital signal processor 1. This digital audio signal 2 is supplied to the D/A converter 3, where it is converted into an analog audio signal 4. This analog audio signal 4 is supplied to the audio analog switch 5 and then to the audio gain control circuit 6, and the speech is reproduced from the audio acoustic element 7. The key validation sound in DTMF or the like is produced from the acoustic element 11 when a sine wave signal from the sine wave generator 8 is supplied to the key validation sound acoustic element 11 through the key validation analog switch 9 and the key validation gain circuit 10.

Generally in the portable telephone or the like, when the speech is produced, the user hears the speech with the telephone brought close to his ear, and when the key validation sound is produced, the user separates the telephone from the ear in order to make a key operation. Therefore, the user must make different operations for the production of the speech and the key validation sound from the telephone, and the speech and the key validation sound are not simultaneously produced. Thus, a control signal 13 is produced from the control portion 12, and controls the audio analog switch 5 and the key validation sound analog switch 9 so that either one of the speech and the key validation sound is selected and produced.

In addition, when the audio output level is adjusted, a control signal 14 is produced from the control portion and supplied to the audio gain control circuit 6, thereby controlling its gain.

### SUMMARY OF THE INVENTION

In the conventional equipment shown in Fig. 2, however, since the sine wave generator 8 and acoustic element 11 special for the key validation sound are provided, the number of the elements which constitute the equipment is increased the more. In addition, since the gain control circuit is provided for the adjustment of the audio output level, the construction becomes complicated. Therefore, the conventional equipment has a difficulty in achieving the small size and light weight which is one of the advantages of the portable telephone.

Accordingly, it is an object of the invention to provide an audio output equipment in which the acoustic element and gain control circuit can be shared by the speech reproduction system and the key validation sound generation system, thereby solving the problems in the conventional equipment.

EP-A-216 488 discloses a digital signal processor (DSP) which performs pulse code modulation (PCM) coding and decoding (CODEC) filter operation for both received and transmitted signals. Two 19-bit wide bidirectional data busses are provided for time-division multiplexed communication between various elements, which include a random access memory (RAM), an arithmetic-logic unit (ALU), and an interface to receive-side analog-to-digital (A/D) converter and a transmit-side digital-to-analog (D/A) converter. Under control of a programmed logic array (PLA) a variety of operations can be performed, such as generation of dual-tone multi-frequency (DTMF) signals commonly used in telecommunications.

GB-A-2,220,821 discloses DTMF generators provided with means for frequency shifting the multiple frequency selection signals. This frequency shifted signal becomes the input to sound generation means.

EP-A-0 280 323 discloses a portable cordless telephone set for outputting various discrimination sounds with simple circuit construction. To this end, a clock generation circuit generating in operation clock of a sound generation control circuit; a sound generator generating sound having different sound pressures in response to different resonant frequencies, one of the resonant frequencies being adjacent to a frequency of the operation clock; and a frequency divider circuit providing at least one divided frequency signal are provided.

US-A-4,776,008 discloses a key-in sound-generating circuit including, i.a. a DTMF signal generator and a sound generator for converting, into a sound, the output signal from the DTMF signal generator. Furthermore, what is comprised is a data processor circuit for executing the key data processing according to the keying operation performed using a keyboard, and supplying a control signal to the DTMF signal generator, the data processor being responsive to the operation of a dial number key, to supply a DTMF signal to the keyboard and the sound generator, and responsive to the operation of the function key, to supply a single-frequency signal to the keyboard and the sound generator.

According to one aspect of the invention, there is provided an audio output equipment which includes a portion for receiving a control signal which indicates which one of a speech and tones is to be generated, and which is indicative of a gain for the one to be generated; a portion for receiving an input signal including speech information; a speech data processing portion for processing the input signal to produce the speech data in accordance with the control signal when the speech is to be generated; a frequency selection portion for selecting one or more frequencies corresponding to the kind of one of the tones in accordance with the control signal when the one of the tones is to be generated; a frequency table for storing data corresponding to the frequencies; data extracting portion for extracting from the frequency table the data corresponding to the one or more frequencies selected by the frequency selection portion; a key validation sound data generation portion for generating key validation sound data on the basis of the data extracted by the data extracting portion; a gain control processing portion, to which either one of the output data from the speech data processing portion and the output data from the key validation sound data generation portion is inputted, for controlling the gain for the input data in accordance with the control signal; a digital-to-analog conversion portion for converting the data from the gain control processing portion into an analog signal; and an acoustic element for producing sound in response to the output signal which the digital-to-analog conversion portion produces.

According to this audio output equipment of the above construction, the following actions can be achieved. When a speech is to be generated, the input signal is processed to produce speech data. When a tone is to be generated, frequencies are selected in accordance with the kind of the tone, and data corresponding to the frequencies are extracted from the frequency table. The key validation sound data is generated on the basis of the extracted data. Either one of the speech data and the key validation sound data is subjected to a specific gain control processing, and then converted into an analog signal. This analog signal is supplied to the acoustic element, and thus sound is emanated from the acoustic element. Therefore, the acoustic element and the gain circuit can be shared by the speech generation system and the key validation sound generation system, so that the number of the components and the size and weight of the equipment can be reduced.

BRIEF DESCRIPTION OF THE DRAWINGS

Fig. 1 is a schematic block diagram of the audio output equipment for the digital land mobile portable telephone as one embodiment of the invention;
Fig. 2 is a schematic block diagram of an example of the prior art;
Fig. 3 is a flowchart useful for explaining the operation of the digital signal processor;
Fig. 4 is a table useful for explaining the specification of frequency bands necessary for the DTMF to the key of telephone;
Fig. 5 is an explanatory diagram useful for explaining the method of producing the frequency table;

Fig. 6 shows the frequency table;
Fig. 7 is a table useful for explaining the specification of frequency bands necessary for the DTMF;
Fig. 8 is a flowchart useful for explaining the sine wave generation operation of the digital signal processor; and
Fig. 9 is a flowchart useful for explaining the gain control operation of the digital signal processor.

DESCRIPTION OF THE PREFERRED EMBODIMENTS

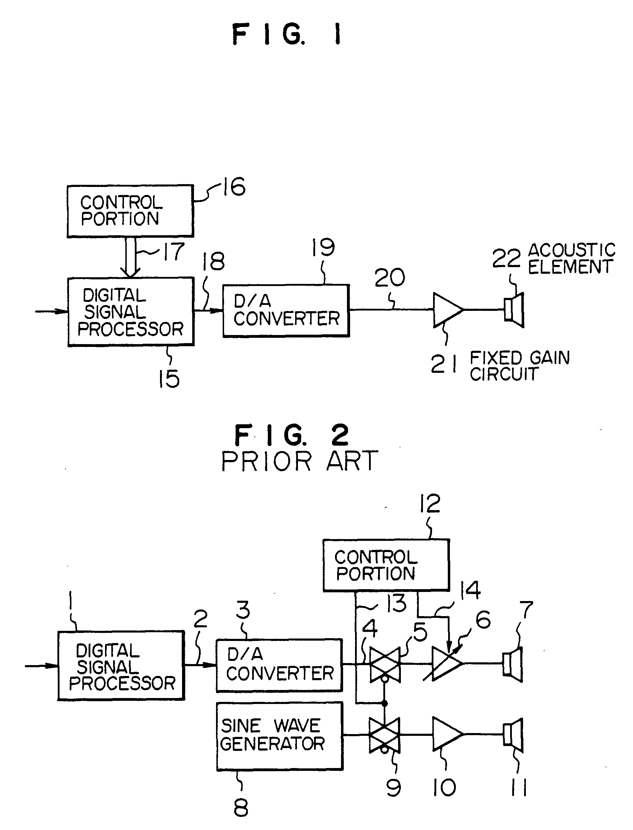

An embodiment of the audio output equipment of the invention will be described with reference to Fig. 1.

Referring to Fig. 1, the audio output equipment has a digital signal processor 15, a control portion 16, a D/A converter 19, a fixed gain circuit 21 and an acoustic element 22. The control portion 16 supplies to the digital signal processor 15 a control signal 17 that indicates which one of a speech and tones is to be generated and indicates the gain for the one to be generated. The digital signal processor 15 receives not only the control signal 17 but also an input signal including speech information. The digital signal processor 15 has a speech data processing portion for processing the input signal to produce speech data, when the speech is to be generated, on the basis of the control signal; a frequency selection portion for selecting one or more frequencies in accordance with the kind of one tone of the tones, when the one tone is to be generated, on the basis of the control signal; a frequency table for storing data corresponding to the frequencies, a data extracting portion by which data corresponding to the one or more frequencies selected by the frequency selection portion is extracted from the frequency table, a key validation sound data generation portion for generating key validation sound data on the basis of the data extracted by the data extracting portion; and a gain control processing portion which receives either one of the output data from the speech data processing portion and the output data from the key validation sound data generation portion, and which controls the gain to the received data on the basis of the control signal. In other words, in order that the acoustic element 22 and the gain circuit 21 are shared by the speech generation system and the key validation sound generation system, the digital signal processor 15 is provided with the sine wave generation function and the gain control function unlike the prior art shown in Fig. 2.

That is, the digital signal processor 15 has the sine wave generation function and the gain control function provided in addition to the digital speech output function, and is controlled by the control signal 17 from the control portion 16 so that one of these functions is selected. When the speech is to be generated, the digital signal processor 15 produces a digital signal 18 including the speech data. When the tone is to be generated, it produces the digital signal 18 including the key validation sound data. The digital signal 18 is converted into an analog signal 20 by the D/A converter 19. This analog signal is amplified by the fixed gain circuit 21 and fed to the acoustic element 22, from which the speech or tone is reproduced.

More specifically, the digital signal processor 15 operates as shown in Fig. 3. It decides whether the sound to be generated is a speech or tone (step S1). If it decides that a speech is to be generated, the input signal is digitally processed to produce speech data (step S2). If it decides that a tone is to be generated, a sine wave is generated (step S3). The signal generated at step S2 or S3 is controlled for its gain in accordance with the control signal 17 (step S4). The gain-controlled signal is fed. to the D/A converter 19 (step S5).

When a sine wave is generated, it is necessary that sine wave information of necessary frequencies of several periods each be previously stored in the frequency table. The method of producing the frequency table will be described below.

First, it is assumed that the sampling frequency is 8 kHz which is generally used in telephone, and that one word of data and data format are respectively 16 bits and 2's complement.

The necessary frequency specification for DTMF can be obtained for the key of telephone on the basis of the above conditions. A description will be made of the method of producing a table of frequency 697 Hz $\pm$ 12 Hz of the frequencies shown in Fig. 4.

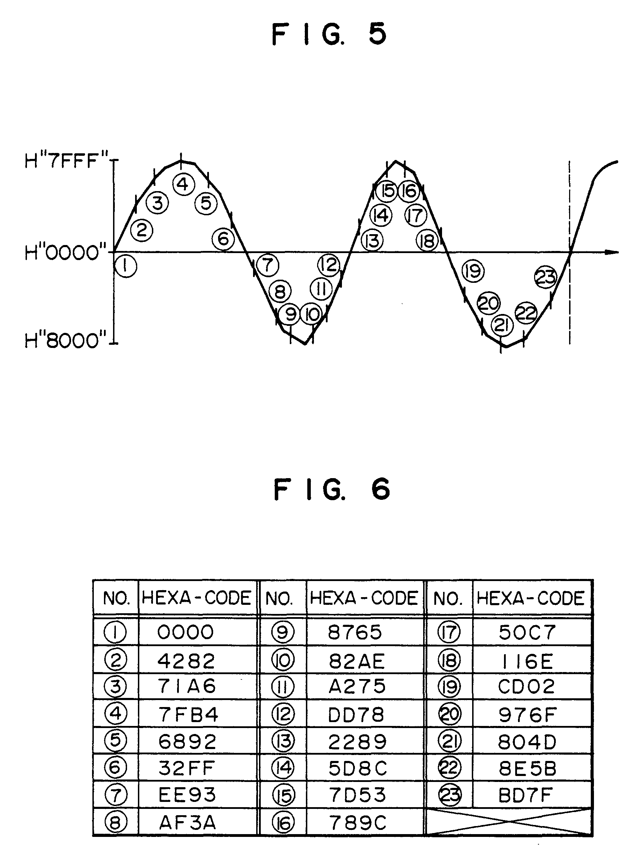

For the frequency 697 Hz $\pm$ 12 Hz, a sine wave signal of two periods having the maximum amplitude is equally divided by 23 on the time axis as shown in Fig. 5, and the codes for the respective parts are tabulated to produce such a frequency table as shown in Fig. 6.

The reason for 697 Hz $\pm$ 12 Hz will be clear from the following expression since the sampling frequency is 8 kHz:

$$8000 \text{ (Hz) X } 2 \div 23 = 696 \text{ (Hz)}$$

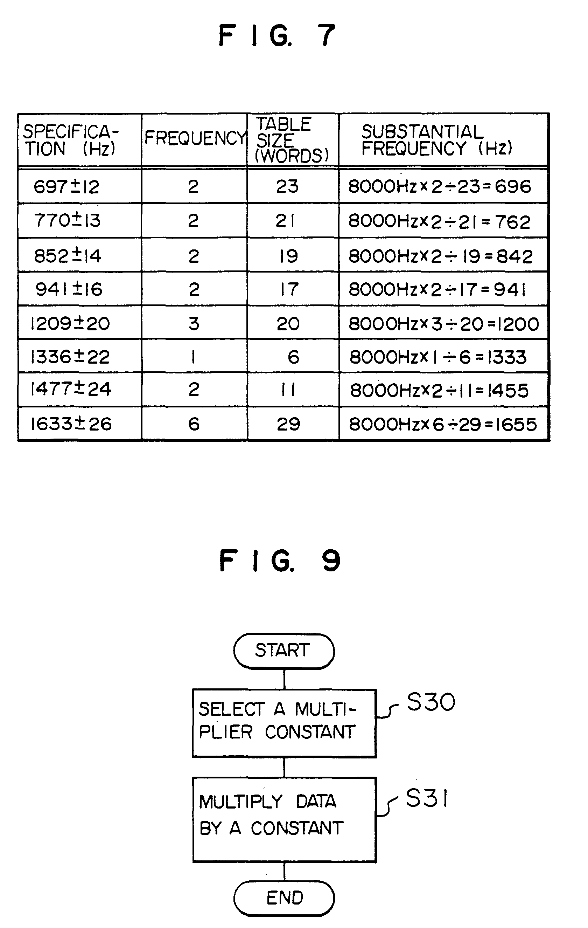

Similarly, other necessary frequencies of DTMF can be obtained as shown in Fig. 7. From Fig. 7, it will be seen that the capacity of the memory means for storing the data of frequency table is extremely small since data of each frequency is stored in the frequency table.

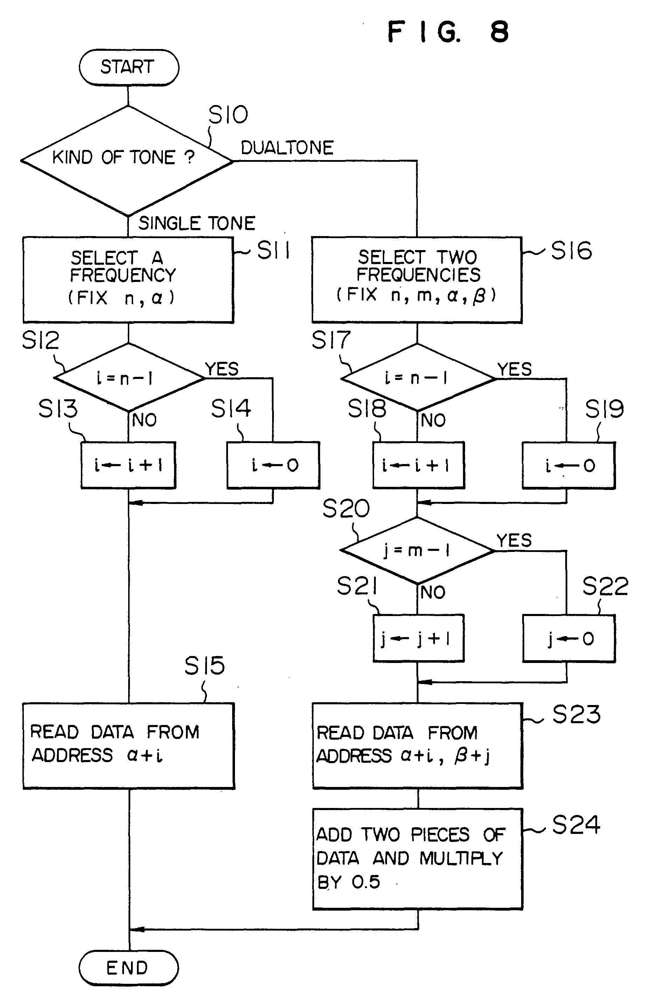

A specific example of the sine wave generation will be mentioned with reference to Fig. 8. First, decision is made of whether the kind of the tone is single or dual (step S10). If the decision is single, the head address $\alpha$ and table size n of the frequency table for a frequency are determined (step S11). Then, address $\alpha$, $\alpha$+1, $\alpha$+2, ..., $\alpha$+n-1, $\alpha$, $\alpha$+1, $\alpha$+2, ... are repeated in this order so that data is read from the frequency table and produced in order (steps S12 through S15).

When the kind of the tone is dual, two different frequency tables are read. The head address $\alpha$ and ta-ble size m of the frequency table for the first frequency and the head address $\beta$ and table size n of the frequency table for the second frequency are determined (step S16). For the first frequency, the address $\alpha$, $\alpha$+1, $\alpha$+2, ..., $\alpha$+n-1, $\alpha$, $\alpha$+1, $\alpha$+2, ... are repeated in this order so that data is read from the frequency table, and for the second frequency, the address $\beta$, $\beta$+1, $\beta$+2, ..., $\beta$+m-1, $\beta$, $\beta$+1, $\beta$+2, ... are repeated in this order so that data is read from the frequency table (step S17 through S23). The two pieces of data thus read are added and then multiplied by 0.5 for the level matching to the single tone, and the added and multiplied data is produced (step S24). In this way, the sine wave generation processing is made.

An example of the gain control processing will be described with reference to Fig. 9. For the gain control processing, a multiplier constant is first determined (step S30), and the input data is multiplied by this multiplier constant (step S31). The product data is produced.

The time for the sine wave generation processing and gain control processing is long enough if the sampling frequency is 8 kHz which is generally used in telephone.

The production of the speech signal or the key validation sound signal of DTMF or the like and the selection of the multiplier constant for use in the gain control are controlled by the control signal 17 from the control means 16.

When the digital signal processor 15 produces the digital signal 18 including the speech signal or key validation sound data, this digital signal 18 is converted into the analog signal 20 by the D/A converter 19. The analog signal 20 is amplified by the fixed gain circuit 21 and fed to the acoustic element 22, and the acoustic element 22 reproduces the speech or tone.

According to this invention, since the acoustic element and the gain circuit are shared by the speech generation system and the key validation sound generation system as described above, the number of the components can be reduced, and the equipment can be constructed to be small and lightweight.

**Claims**

1. An audio output equipment comprising:

   means (15) for receiving a control signal which indicates which one of a speech and tones is to be generated, and which is indicative of a gain for said one to be generated;
   means (15) for receiving an input signal including speech information;
   speech data processing means (S2) for processing said input signal to produce said speech data in accordance with said control signal when said speech is to be generated;

frequency selection means (S10, S16) for selecting one or more frequencies corresponding to the kind of one of said tones in accordance with said control signal when said one tone is to be generated;

a frequency table for storing data corresponding to said frequencies;

data extracting means (S23) for extracting from said frequency table said data corresponding to said one or more frequencies selected by said frequency selection means (S10, S16);

key validation sound data generation means (S24) for generating key validation sound data on the basis of said data extracted by said data extracting means (S23);

gain control processing means (S4), to which either one of said output data from said speech data processing means (S2) and said output data from said key validation sound data generation means (S24) is inputted, for controlling the gain for said input data in accordance with said control signal;

digital-to-analog conversion means (19) for converting said data from said gain control processing means (S4) into an analog signal; and

an acoustic element (22) for producing sound in response to the output signal which said digital-to-analog conversion means (19) produces.

2. An audio output equipment according to claim 1, wherein said key validation sound data generation means includes means (S24) for successively adding said extracted data from said data extracting means to produce said key validation sound data.

**Patentansprüche**

1. Audioausgabegerät, enthaltend:

eine Einrichtung (15) zum Empfangen eines Steuersignals, das angibt, ob Sprache oder Ton erzeugt werden soll, und das eine Verstärkung für das zu Erzeugende angibt;

eine Einrichtung (15) zum Empfangen eines Eingabesignals, das Sprachinformationen enthält;

eine Sprachdatenverarbeitungseinrichtung (S2) zum Verarbeiten des Eingabesignals, um die Sprachdaten in Übereinstimmung mit dem Steuersignal zu erzeugen, wenn Sprache erzeugt werden soll;

eine Frequenzauswahleinrichtung (S10, S16) zum Auswählen einer oder mehrerer Frequenzen, die der Art eines der Töne in Übereinstimmung mit dem Steuersignal entsprechen, wenn dieser eine Ton erzeugt werden soll;

eine Frequenztabelle zum Speichern von den Frequenzen entsprechenden Daten;

eine Datenentnahmeeinrichtung (S23) zum Entnehmen der Daten aus der Frequenztabelle, die der einen oder den mehreren Frequenzen entsprechen, die von der Frequenzauswahleinrichtung (S10, S16) ausgewählt wurden;

eine Tastenprüfschalldatenerzeugungseinrichtung (S24) zum Erzeugen von Tastenprüfschalldaten auf der Basis der von der Datenentnahmeeinrichtung (S23) entnommenen Daten;

eine Verstärkungssteuerungsverarbeitungseinrichtung (S4), der entweder die Ausgabedaten von der Sprachdatenverarbeitungseinrichtung (S2) oder die Ausgabedaten von der Tastenprüfschalldatenerzeugungseinrichtung (S24) eingegeben werden, um die Verstärkung der Eingabedaten in Übereinstimmung mit dem Steuersignal zu steuern;

eine Digital-Analog-Umwandlungseinrichtung (19) zum Umwandeln der Daten von der Verstärkungssteuerungsverarbeitungseinrichtung (S4) in ein analoges Signal; und

ein akustisches Element (22) zum Erzeugen von Schall ansprechend auf das Ausgabesignal, das die Digital-Analog-Umwandlungseinrichtung (19) erzeugt.

2. Audioausgabegerät nach Anspruch 1, bei welchem die Tastenprüfschalldatenerzeugungseinrichtung eine Einrichtung (S24) zum sukzessiven Addieren der entnommenen Daten von der Datenentnahmeeinrichtung enthält, um die Tastenprüfschalldaten zu erzeugen.

**Revendications**

1. Equipement de sortie audio comprenant :

des moyens (15) pour recevoir un signal de commande qui indique lequel parmi de la parole et des sons doit être généré, et qui est indicatif d'un gain pour celui qui doit être généré ;
des moyens (15) pour recevoir un signal d'entrée comprenant une information vocale ;

des moyens de traitement de données vocales (S2) pour traiter ledit signal d'entrée de façon à produire lesdites données vocales en fonction dudit signal de commande lorsque ladite parole doit être générée ;

des moyens de sélection de fréquence (S10, S16) pour sélectionner une ou plusieurs fréquences correspondant au type de l'un desdits sons en fonction dudit signal de commande lorsque ledit un son doit être généré ;

une table de fréquences pour mémoriser des données correspondant auxdites fréquences ;

des moyens d'extraction de données (S23) pour extraire de ladite table de fréquences lesdites données correspondant auxdites fréquences au nombre d'une ou de plusieurs sélectionnées par lesdits moyens de sélection de fréquence (S10, S16) ;

des moyens de génération de données de son de validation de touche (S24) pour générer des données de son de validation de touche en fonction desdites données extraites par lesdits moyens d'extraction de données (S23);

des moyens de traitement de commande de gain (S4), sur lesquels les unes ou les autres parmi lesdites données de sortie desdits moyens de traitement de données vocales (S2) et lesdites données de sortie desdits moyens de génération de données de son de validation de touche (S24) sont entrées, pour commander le gain pour lesdites données d'entrée en fonction dudit signal de commande ;

des moyens de conversion numérique/analogique (19) pour convertir lesdites données venant desdits moyens de traitement de commande de gain (S4) en un signal analogique ; et

un élément acoustique (22) pour produire un son en réponse au signal de sortie que produisent lesdits moyens de conversion numérique/ analogique (19).

2. Equipement de sortie audio selon la revendication 1, dans lequel lesdits moyens de génération de données de son de validation de touche comprennent des moyens (S24) pour ajouter successivement lesdites données extraites desdits moyens d'extraction de données afin de produire lesdites données de son de validation de touche.

F I G. 1

CONTROL
PORTION                16

17
                  18        19        20
DIGITAL
SIGNAL        D/A              ACOUSTIC
PROCESSOR    CONVERTER    22  ELEMENT

15                        21  FIXED GAIN
                             CIRCUIT

F I G. 2
PRIOR ART

                    12
              CONTROL
              PORTION

        2   3        13    14
                      4   5   6   7
DIGITAL
SIGNAL      D/A
PROCESSOR  CONVERTER

            SINE WAVE
            GENERATOR

            8        9   10   11

# F I G. 3

```
                    ( START )
                        │
                        ▼
                    ╱───────╲           S1
                   ╱  SPEECH  ╲   TONE
                  ╱    OR      ╲─────────────┐
                   ╲   TONE ?  ╱             │
                    ╲───────╱                │
    S2                  │ SPEECH        S3   │
     │                  │                │   │
 ┌──────────────────┐   │   ┌──────────────────┐
 │ PROCESS DIGITAL  │   │   │   GENERATE       │
 │ AUDIO  SIGNAL    │   │   │   SINE  WAVE     │
 └──────────────────┘   │   └──────────────────┘
           │            ◄───────────┘
      ┌──────────────────┐
      │    CONTROL        │─── S4
      │    GAIN           │
      └──────────────────┘
           │
      ┌──────────────────┐
      │ SUPPLY  OUTPUT    │─── S5
      │ TO  D/A  CONVER-  │
      │ TER              │
      └──────────────────┘
```

# F I G. 4

| | | | | |
|---|---|---|---|---|
| "1" | "2" | "3" | "A" | 697Hz ±12Hz |
| "4" | "5" | "6" | "B" | 770Hz ±13Hz |
| "7" | "8" | "9" | "C" | 852Hz ±14Hz |
| "*" | "0" | "#" | "D" | 941Hz ±16Hz |
| 1209Hz ±20Hz | 1336Hz ±22Hz | 1477Hz ±24Hz | 1633Hz ±26Hz | LOW FREQUENCY GROUP / HIGH FREQUENCY GROUP |

# F I G. 5

# F I G. 6

| NO. | HEXA-CODE | NO. | HEXA-CODE | NO. | HEXA-CODE |
|---|---|---|---|---|---|
| ① | 0000 | ⑨ | 8765 | ⑰ | 50C7 |
| ② | 4282 | ⑩ | 82AE | ⑱ | 116E |
| ③ | 71A6 | ⑪ | A275 | ⑲ | CD02 |
| ④ | 7FB4 | ⑫ | DD78 | ⑳ | 976F |
| ⑤ | 6892 | ⑬ | 2289 | ㉑ | 804D |
| ⑥ | 32FF | ⑭ | 5D8C | ㉒ | 8E5B |
| ⑦ | EE93 | ⑮ | 7D53 | ㉓ | BD7F |
| ⑧ | AF3A | ⑯ | 789C | | |

# F I G. 7

| SPECIFICA-TION (Hz) | FREQUENCY | TABLE SIZE (WORDS) | SUBSTANTIAL FREQUENCY (Hz) |
|---|---|---|---|
| 697±12 | 2 | 23 | 8000Hz×2÷23=696 |
| 770±13 | 2 | 21 | 8000Hz×2÷21=762 |
| 852±14 | 2 | 19 | 8000Hz×2÷19=842 |
| 941±16 | 2 | 17 | 8000Hz×2÷17=941 |
| 1209±20 | 3 | 20 | 8000Hz×3÷20=1200 |
| 1336±22 | 1 | 6 | 8000Hz×1÷6=1333 |
| 1477±24 | 2 | 11 | 8000Hz×2÷11=1455 |
| 1633±26 | 6 | 29 | 8000Hz×6÷29=1655 |

# F I G. 9

```
      START
        |
  SELECT A MULTI-      ─ S30
  PLIER CONSTANT
        |
  MULTIPLY DATA        ─ S31
  BY A CONSTANT
        |
       END
```

# F I G. 8

```
                    START

                      |
              ┌───────┴───────┐  S10
              │  KIND OF TONE ? │──── DUALTONE ────────────────────┐
              └───────┬───────┘                                    │
                  SINGLE TONE                                      │
              ┌───────┴───────┐  S11              ┌────────────────┴──┐  S16
              │  SELECT A      │                  │  SELECT TWO        │
              │  FREQUENCY     │                  │  FREQUENCIES       │
              │  (FIX n, α)    │                  │  (FIX n, m, α, β)  │
              └───────┬───────┘                   └────────┬──────────┘
       S12    ┌───────┴───────┐  YES        S17   ┌────────┴─────┐  YES
              │   i = n − 1    │─────┐             │   i = n − 1  │─────┐
              └───────┬───────┘      │            └────────┬─────┘      │
       S13       NO   │         S14  │       S18      NO   │       S19  │
           ┌──────────┴─┐  ┌─────────┴──┐        ┌─────────┴──┐  ┌──────┴───┐
           │  i ← i + 1 │  │   i ← 0    │        │  i ← i + 1 │  │  i ← 0   │
           └──────┬─────┘  └─────┬──────┘        └─────┬──────┘  └────┬─────┘
                  │              │                     │              │
                  └──────┬───────┘                     └──────┬───────┘
                         │                         S20  ┌─────┴──────┐  YES
                         │                              │  j = m − 1 │────┐
                         │                              └─────┬──────┘    │
                         │                     S21       NO   │      S22  │
                         │                         ┌──────────┴─┐ ┌───────┴──┐
                         │                         │  j ← j + 1 │ │  j ← 0   │
                         │                         └──────┬─────┘ └────┬─────┘
                         │                                └─────┬──────┘
          S15            │                         S23  ┌───────┴──────────┐
           ┌─────────────┴────┐                         │  READ DATA FROM  │
           │  READ DATA FROM  │                         │  ADDRESS α+i, β+j│
           │  ADDRESS α+i     │                         └───────┬──────────┘
           └─────────────┬────┘                         S24 ┌───┴──────────────┐
                         │                                  │  ADD TWO PIECES OF│
                         │                                  │  DATA AND MULTIPLY │
                         │                                  │  BY 0.5            │
                         │                                  └───────┬──────────┘
                         └──────────────┬──────────────────────────┘
                                    END
```